# EUROPÄISCHE PATENTANMELDUNG

(11) **EP 1 783 859 A1**
(43) Veröffentlichungstag der Anmeldung: **09.05.2007**
(21) Anmeldenummer: 06021287.5
(22) Anmeldetag: 11.10.2006
(51) Int. Cl.: H01Q 1/32, H01Q 1/28

(54) **Verfahren zur Herstellung einer strukturintegrierten Antenne**

(30) Priorität: 20.10.2005 DE 102005050204
(71) Anmelder: EADS Deutschland GmbH, 85521 Ottobrunn (DE)
(72) Erfinder: Utecht, Stefan, 86916 Kaufering (DE); Sekora, Robert, 85614 Kirschseeon (DE)

(57) **Zusammenfassung**

Die Erfindung betrifft ein Verfahren zur Herstellung einer strukturintegrierten Antenne in der Faserverbund-Trägerstruktur eines Fahrzeugs, insbesondere eines Fluggeräts, mit folgenden Verfahrensschritten:
- Anordnen eines Antennen-Vorformlings auf eine Trägersystem-Primärstruktur (10), welche in Form eines faserhaltigen Halbzeugs vorliegt, wobei der Antennen-Vorformling in einer Schicht angeordnete ein oder mehrere flexible leitfähige Antennenelemente (20) umfasst,
- Aushärten des Bauteils durch eine Temperatur- und/oder Druckbehandlung.

Eine strukturintegrierte Antenne ist ebenfalls Gegenstand der Patentanmeldung.

## Beschreibung

Die Erfindung betrifft ein Verfahren zur Herstellung einer strukturintegrierten Antenne in der Faserverbund-Trägerstruktur eines Fahrzeugs, insbesondere eines Fluggeräts.

Die strukturintegrierte Antenne ist allgemein für Fahrzeug und insbesondere für Fluggeräte anwendbar, z.B. für Flugzeuge, Hubschrauber, Luftschiffe, Drohnen, Raketen oder auch Raumfahrzeuge.

Aus dem Stand der Technik sind Halbwellen- oder Viertelwellen-Langdraht-Antennen sowie die davon abgeleiteten Bauformen oder Schwert-Antennen mit großen Frequenz-Bereichen, d.h. von 2 MHz bis 400 MHz, bekannt. Diese Antennen bringen jedoch insbesondere bei Flugzeugen einerseits aerodynamische Probleme mit sich und lassen sich andererseits aufgrund ihrer Abmessungen von bis zu einigen zehn Metern nur mit großem Aufwand installieren. Da nur spezielle Einbau-Orte für diese Antennen an Fahrzeugen sinnvoll sind, sind bei der Installation der Antennen meist große Kabellängen erforderlich, was den Installationsaufwand erhöht und entsprechende Leitungsverluste nach sich zieht, was wiederum die Übertragungsqualität beeinträchtigt.

Verstärkt wird diese Problematik dadurch, dass bei modernen Fluggeräten die Anzahl von Avionik-Funktionen zunehmend ansteigt und somit auch die erforderliche Anzahl von Antennen zunimmt, wobei eine Größenordnung von sechzig Antennen-Systemen zur Anwendung kommen können. Aus dem allgemeinen Stand der Technik ist bekannt, derartige Antennen grundsätzlich in Trägerstrukturen von Fahrzeugen oder Fluggeräten strukturell zu integrieren. Aus der EP 1 538 698 A1 ist z.B. eine außenstrukturkonforme Antenne in einer Trägerstruktur eines Fahrzeugs bekannt. Dort ist die Antenne in Form eines Antennen-Funktionskerns in einer Mulde einer Trägersystem-Primärstruktur aus einem Faserverbund-Werkstoff form- oder kraftschlüssig eingebettet. Beim Einsetzen des Antennen-Funktionskerns in die Trägersystem-Primärstruktur liegt die Trägersystem-Primärstruktur bereits als vollständig ausgehärtetes faserverstärktes Kunststoffmaterial vor. Der Antennen-Funktionskern umfasst dabei ein hartes, starres Substrat für die Antennenelemente. Diese Bauweise ist mit wesentlichen Einschränkungen hinsichtlich der Oberflächenformgebung verbunden. Insbesondere größere Antennenstrukturen, typischerweise ab 0,1 m sind damit nur sehr eingeschränkt realisierbar.

Allerdings erschließen diese Antennentypen die Frequenzbereiche oberhalb 1,0 GHz, was zu einer kleinen und kompakten Bauweise der Elementarstrahler führt. Erst durch die Kombination dieser Elementarstrahler zu Gruppenantennen wird eine größere Ausdehnung, d.h. bis zum 50fachen Betrag der genutzten Wellenlänge, erforderlich.

Zum diesbezügliche bekannten Stand der Technik sei verwiesen auf eine Publikation von Dipl.-Ing. Robert Sekora u.a. unter dem Titel: "Conformal Airborne Array Antenna for Broad Band Data Link Applications in the X-Band". Diese Abhandlung zeigt im wesentlichen die Unterschiede auf zwischen herkömmlichen und aktuelleren aussenstrukturkonformen Antennensystemen, die eng an die Struktur - in diesem Falle von Flugzeugen - angepasst sind.

Eine weitere einschlägige Vorveröffentlichung ist ein Aufsatz, ebenfalls von Dipl.-Ing. Robert Sekora, unter dem Titel: "Strukturintegrierte Flugzeugantenne für Breitbandanwendungen im X-Band". Der Autor erklärt in dieser Publikation die strukturelle Integrierbarkeit einer Array-Antenne. Des weiteren wird der strukturelle Aufbau hinsichtlich seiner elektromagnetischen Funktion bestätigt.

Diese aus dem Stand der Technik bekannten Antennen-Bauweisen eignen sich nicht für die Anwendung als Elementarstrahler, die nur einzeln oder paarweise zugeordnet auf Bauteil-Strukturen wie z.B. Flugzeug-Strukturen installiert werden, da für diese aufgrund deren absoluten Größe spezielle Anforderungen hinsichtlich Integration bestehen. Ein Erfordernis ist dabei, den Bereich mit der in die Struktur integrierten Antenne für vorbestimmte mechanische Belastungen auszulegen. In elektronischer Hinsicht sind für die Antennen geeignete Materialien vorzusehen, wobei die mechanische Festigkeit und Stabilität der Struktur nicht beeinträchtigt werden darf.

Aufgabe der Erfindung ist es, ein Verfahren zur Herstellung einer strukturintegrierten Antenne sowie eine strukturintegrierte Antenne bereitzustellen, wobei durch den Einbau der Antenne die mechanische Festigkeit und Belastbarkeit der Trägersystem-Primärstruktur sowie deren äußere Form nicht beeinträchtigt werden soll.

Diese Aufgabe wird mit dem Verfahren nach Patentanspruch 1 gelöst. Vorteilhafte Ausführungen der Erfindung sowie eine strukturintegrierte Antenne sind Gegenstand von weiteren Ansprüchen.

Bei dem erfindungsgemäßen Verfahren wird die in die Trägerstruktur eines Fahrzeugs zu integrierende Antenne bereits bei der Herstellung der Trägerstruktur integriert. Die Antenne bildet somit einen untrennbaren Bestandteil dieser Struktur.

Dabei wird ein Antennen-Vorformling auf eine Trägersystem-Primärstruktur, welche in Form eines faserhaltigen (trockenen oder vorimprägnierten) Halbzeugs vorliegt, angeordnet. Der Antennen-Vorformling umfasst dabei in einer Schicht angeordnete ein oder mehrere flexible, leitfähige Elemente, im folgenden auch als Antennenelemente bezeichnet. Die Antennenelemente liegen bevorzugt in Form eines Metallstreifens, eines Drahts oder eine Drahtgeflechts, z.B. nach Art einer Litze, vor. Durch die Flexibilität der Antennenelemente können mit dem erfindungsgemäßen Verfahren beliebige dreidimensionale Formen der Antennenstruktur ermöglicht werden. Anschließend erfolgt eine Aushärtung des Bauteils durch eine Temperatur- und/oder Druckbehandlung (auch unter Vakuumbedingungen), z.B. in einem Autoklaven oder einem Umluftofen.

Anders als bei der EP 1 538 698 A1 handelt es sich bei der vorliegenden Erfindung somit nicht nur um eine außenstrukturkonforme Antenne, sondern um eine strukturintegrierte Antenne. Insbesondere werden durch die Antennenelemente keine Fasern der Trägersystem-Primärstruktur unterbrochen. Unbewegliche Substrate für die leitfähigen Elemente werden nicht benötigt.

Die erfindungsgemäß hergestellte Antenne bietet gegenüber konventionellen Antennenkonstruktionen signifikante Gewichts- und Volumeneinsparungen, die sich besonders vorteilhaft bei Flugzeugen auswirken. Da beim Einsatz der erfindungsgemäß hergestellten Antenne aufgrund der Verwendung der flexiblen, biegefähigen Antennenelemente die Form der Außenhaut der Strukturen unverändert bleiben kann, ist der Einsatz der Antenne in aerodynamischer Hinsicht optimal.

Da am Einbauort der Antenne die mechanischen Eigenschaften der Trägerstruktur nicht beeinträchtigt werden, kann die Antenne an vielen Stellen der Fahrzeugstruktur eingesetzt werden, so dass sich hinsichtlich der Abstrahlungseigenschaften, d.h. hinsichtlich der elektronischen und elektromagnetischen Antennen-Eigenschaften optimale Einbauorte ergeben können.

In elektronischer Hinsicht führt die erfindungsgemäße Strukturintegration der Antenne zu einem beachtlichen Potential hinsichtlich der Reduktion der Radarsignatur gegenüber herkömmlichen Antennen.

Die in einer Schicht angeordneten flexiblen, leitfähigen Elemente der Antenne (die durch die Lage der Antennenelemente definierte Schicht wird im folgenden als Antennenschicht bezeichnet) sind aus einem metallischen und in geeigneter Weise leitfähigen Material gebildet. Als Materialien kommen insbesondere Kupfer, Messing, Aluminium, Silber, Gold, Zinn und daraus abgeleitete bzw. hergestellte Legierungen in Betracht. Die Antennenschicht kann darüber hinaus Bestandteile aus di-elektrischen Werkstoffen, z.B. aus Quarzglas, Keramik-Verbundwerkstoffe, PTFE aufweisen. Die leitfähigen Elemente können aus einem Draht oder einer hoch-flexiblen elektrisch leitenden Litze und insbesondere einer Kupfer-Litze gebildet sein. Die Litzen-Anordnung kann dabei die Form eines geflochtenen Gebildes oder eines flachen, streifenartigen Bündels aufweisen. Alternativ können die metallischen Elemente der Antennenschicht auch aus ein oder mehreren Metallstreifen bestehen. Möglich sind aber auch Folien oder aus Folien gestanzte Formteile.

Das Material der Trägersystem-Primärstruktur liegt als faserhaltiges trockenes oder vorimprägniertes (Prepregs) Halbzeug vor. Als Fasern können insbesondere C-Fasern (GFK), Glasfasern (GFK), Aramidfasern (AFK), Borfasern (BFK), Keramikfasern oder Siliziumfasern eingesetzt werden.

Der Antennen-Vorformling kann in seiner einfachsten Ausbildung aus der Antennenschicht selbst bestehen. Wird im Falle einer leitfähigen Trägersystem-Primärstruktur (z.B. bei der Verwendung von C-Fasern) eine Isolationsschicht als Zwischenschicht zwischen Trägersystem-Primärstruktur und Antennenschicht benötigt, so kann der Antennen-Vorformling eine solche Isolationsschicht umfassen. Es ist jedoch auch möglich, die Isolationsschicht zunächst auf der Trägersystem-Primärstruktur aufzubringen, und danach erst den Antennen-Vorformling aufzubringen.

Darüber hinaus kann der Antennen-Vorformling neben der Antennenschicht und/oder der Isolationsschicht eine nichtleitende Deckschicht umfassen, die den äußeren Abschluss der Struktur bildet. Die nichtleitende Deckschicht kann jedoch auch in einem separaten Arbeitsgang auf den Antennen-Vorformling aufgebracht werden, nachdem letzterer bereits auf der Trägersystem-Primärstruktur aufgebracht worden ist. Die Deckschicht ist nur optional vorgesehen, da deren Erfordernis vom Anwendungsfall abhängt.

Als Materialen für Deck- und Zwischenschicht können bevorzugt Glasfasermaterialen, z.B. ausgebildet als Glas-Gewebe eingesetzt werden. Besonders vorteilhaft kann dabei ein Multiaxialgelege verwendet werden.

Deck- und Isolationschicht sowie das oder die leitfähigen Antennenelemente sind vorteilhaft derart aufeinander abgestimmt, dass sie im wesentlichen gleiche Form und Größe aufweisen, so dass eine vollständige Abdeckung der leitfähigen Elemente ermöglicht wird. Vorteilhafterweise wird man die Abmessungen der Deck- und Isolationsschicht etwas größer wählen als die der Antennenelemente, um eine sichere Abdeckung bzw. Isolierung zu erzielen.

Wie bereits erwähnt, können Trägersystem-Primärstruktur, Zwischen- und Deckschicht sowohl als trockenes faserhaltiges Halbzeug oder aber in Form eines so genannten Prepregs vorliegen, d.h. als mit einem Harz vorimprägnierten Fasermaterial. Im Falle der Verwendung von Prepregs wird durch das Harz der Prepregs die Haftung der zu verbindenden Schichten bereits sichergestellt. Zusätzliche Verbindungstechniken müssen deshalb nicht angewandt werden. Außerdem ist bei der Verwendung von Prepregs eine zusätzliche Infiltration des Bauteils nicht notwendig. Sobald der Schichtaufbau komplett ist, muss lediglich eine Aushärtung unter erhöhter Temperatur durchgeführt werden. Diese kann mit oder ohne Anlegen eines Überdrucks oder unter Vakuumbedingungen in einem Autoklaven oder einem Umluftofen erfolgen.

Liegen die Materialien für Trägersystem-Primärstruktur, Zwischen- und Deckschicht jedoch in Form eines trockenen faserhaltigen Halbzeugs vor, muss für die Verbindung der einzelnen Schichten Sorge getragen werden. Für die Fixierung und die Verbindung der einzelnen Schichten untereinander bzw. mit der Trägersystem-Primärstruktur können sowohl Klebetechniken (auch in Verbindung mit Wärmeeintrag - d.h. Aufbügeln der zu verbindenden Schichten) als auch Näh- und Sticktechniken verwendet werden. Besonders vorteilhaft wird der Antennen-Vorformling auf die Trägersystem-Primärstruktur aufgenäht oder aufgestickt. Wird eine Isolationsschicht benötigt, so können die leitfähigen Elemente der Antennenschicht direkt auf die (trockene) Isolationsschicht gestickt oder genäht werden. Anschließend erfolgt das Vernähen bzw. Aufsticken des derart hergestellten Antennen-Vorformlings auf die Trägersystem-Primärstruktur.

Für das Verkleben können z.B. thermoplastische Zwischenschichten eingesetzt werden. Diese Fixierschichten können aus einer thermoplastischen Folie oder einem thermoplastischen Vlies, einem Co-Polyamid, insbesondere aus Crylon oder einer anderen thermoplastischen Verbindung gebildet sein. Zur Verbindung kann auch ein Sprühkleber oder ein Puderverbinder oder auch Harzfilme eingesetzt werden, so dass die Fixierschichten auch aus Harz gebildet sein können.

Bei trockenen Ausgangsmaterialien erfolgt nach Verkleben bzw. Vernähen oder Aufsticken die Infiltrierung des Bauteils mit einem geeigneten Harz. Hierfür ist insbesondere ein Injektionsverfahren, z.B. nach den DE 100 13 409 C1 oder der DE 101 40 166 A1 geeignet. Anschließend erfolgt die Aushärtung unter erhöhter Temperatur. Diese kann mit oder ohne Anlegen eines Überdrucks in einem Autoklaven oder einem Umluftofen erfolgen.

Mit dem erfindungsgemäßen Verfahren ist die Herstellung beliebiger, auch dreidimensional gekrümmter abwickelbarer oder nicht abwickelbarer oder nicht vollständig abwickelbarer Strukturen möglich.

Die Erfindung wird im folgenden anhand konkreter Ausführungsbeispiele unter Bezugnahme auf Figuren näher erläutert. Die Figuren zeigen jeweils in schematischer Explosionsdarstellung den Schichtaufbau des erfindungsgemäß hergestellten Bauteils bei folgenden Verfahrensvarianten:
- Fig. 1:: Herstellung durch Stick- oder Nähtechniken;
- Fig. 2:: Herstellung mit Prepregs als Ausgangsmaterial für die einzelnen Schichten;
- Fig. 3:: Herstellung mit trockenem Faserhalbzeug als Ausgangsmaterial für die einzelnen Schichten;
- Fig. 4:: Schichtaufbau gemäß Fig. 3;
- Fig. 5:: Herstellung mit trockenem Faserhalbzeug als Ausgangsmaterial, jedoch ohne Isolationsschicht und Deckschicht.

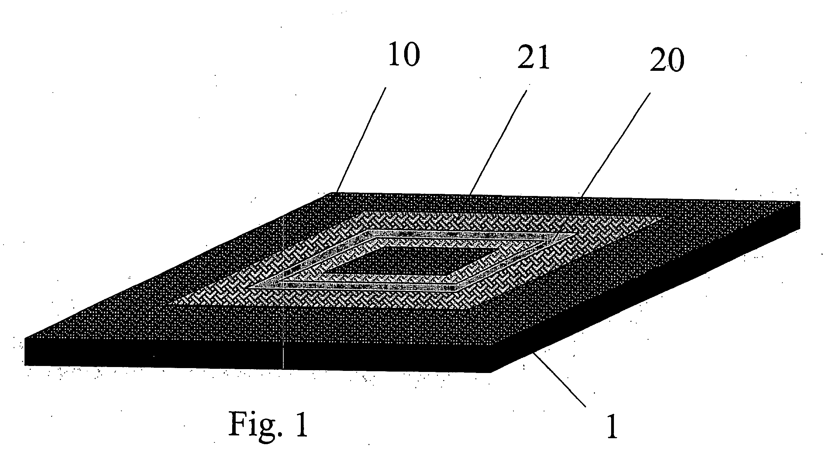

Fig. 1 zeigt eine erste Ausführung des erfindungsgemäßen Verfahrens unter Anwendung von Stick- oder Nähtechniken. Die Trägersystem-Primärstruktur 10 in Form eines trockenen Faserhalbzeugs (z.B. C- oder Glasfasern) ist in einem Spannrahmen 1 eingespannt. Das in einer Schicht angeordnete leitförmige einzige Antennenelement 20 liegt hier als metallische Litze (z.B. Kupfer, Silber, Gold, Bronze) in Form einer rechtwinkligen Schlaufe vor. Das Antennenelement 20 wird mittels CNCgesteuertem Stick/Näh-Kopf auf die Trägersystem-Primärstruktur aufgestickt oder aufgenäht. Durch die Wiederholgenauigkeit der CNC-gesteuerten Anlage ist insbesondere die Positionierbarkeit von sich überdeckenden Schichten gewährleistet. Durch den Einsatz eines robotergeführten Systems lassen sich auch dreidimensional gekrümmte, nicht abwickelbare Strukturen erzeugen.
Weist das Material der Trägersystem-Primärstruktur eine elektrische Leitfähigkeit auf (z.B. bei Verwendung von C-Fasern), so muss zwischen dem Antennenelement 20 und der Trägersystem-Primärstruktur 10 eine Isolationsschicht 21 angeordnet werden. In diesem Fall kann in einem separaten Arbeitsgang das Antennenelement 20 zunächst auf eine geschlossene Isolationsschicht aufgenäht oder aufgestickt werden. Anschließend werden die überstehenden Bereiche der Isolationsschicht (welche nicht von dem Antennenelement 20 bedeckt sind) unter Einhaltung eines Sicherheitsüberstands entfernt, so dass Antennenelement 20 und beschnittene Isolationsschicht 21 im Wesentlichen gleiche Form und (bis auf den Sicherheitsüberstand) im Wesentlichen gleiche Abmessungen aufweisen. Der so gefertigte schlaufenförmige Antennen-Vorformling wird anschließend auf die Trägersystem-Primärstruktur 10 aufgestickt oder aufgenäht.
In beiden Verfahrensvarianten erfolgt nach Erzeugung des gewünschten Schichtenaufbaus eine Imprägnierung des Bauteils mit einem geeigneten Harz. Anschließend erfolgt die Aushärtung des Bauteils durch eine Wärmebehandlung, die mit oder ohne Anlegen von Überdruck oder unter Vakuumsbedingungen vorgenommen werden kann.

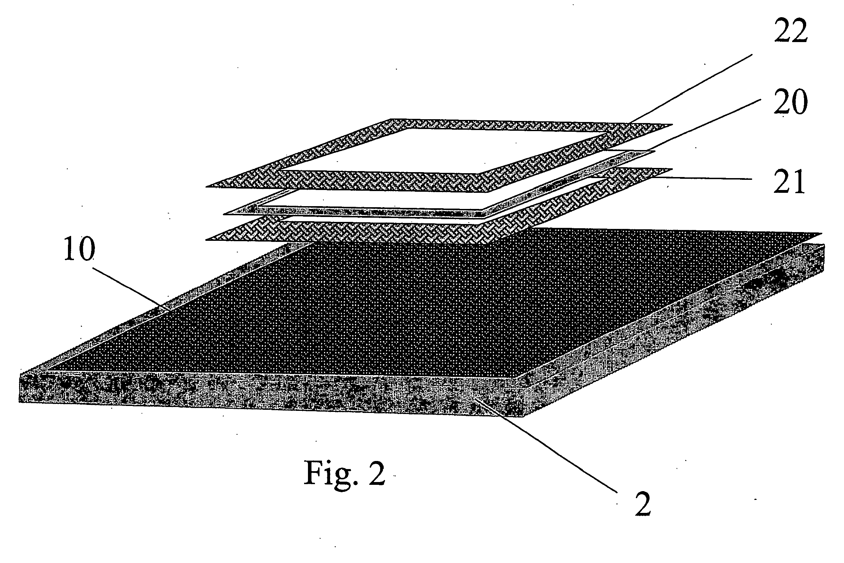

Fig. 2 zeigt als weitere Verfahrensvariante eine Herstellung des Bauteils, hier mit vorimprägnierten Prepregs als Ausgangsmaterial für die einzelnen Schichten (Trägersystem-Primärstruktur 10, Isolationsschicht 21, Deckschicht 22). Die Trägersystem-Primärstruktur 10 ist in einer Aushärtevorrichtung eingelegt. Der zu erzeugende Schichtaufbau wird mittels eines Handauflegeverfahrens der einzelnen Schichten oder mittels eines CNC-gesteuerten Legekopfs erzeugt. Das in einer Schicht angeordnete leitförmige Antennenelement 20 liegt ähnlich wie bei Fig. 1 als metallische Litze (z.B. Kupfer, Silber, Gold, Bronze) in Form einer rechtwinkligen Schlaufe vor. Die Isolationsschicht 21 kann ohne weitere Klebeschicht auf die Trägersystem-Primärstruktur 10 aufgelegt werden, da das Harz der Prepregs die Haftung zwischen den Schichten vermittelt. Anschließend wird das Antennenelement 20 auf die Isolationsschicht 21 und die Deckschicht 22 auf dem Antennenelement 20 abgelegt, und zwar jeweils ohne zusätzliche Klebeschicht.
In einer weiteren Verfahrensvariante wird in einem separaten Verfahrensschritt zunächst ein Sandwich aus Deckschicht 22, Isolationsschicht 21 und dazwischen liegendem Antennenelement 20 zur Erzeugung eines Antennen-Vorformlings gebildet. Der Antennen-Vorformling wird danach auf die Trägersystem-Primärstruktur 10 aufgebracht. Die Verbindung erfolgt jeweils ohne zusätzliche Verbindungsschichten.

In beiden Verfahrensvarianten erfolgt nach Erzeugung des gewünschten Schichtenaufbaus die Aushärtung des Bauteils durch eine Wärmebehandlung, die mit oder ohne Anlegen von Überdruck oder unter Vakuumbedingungen vorgenommen werden kann.

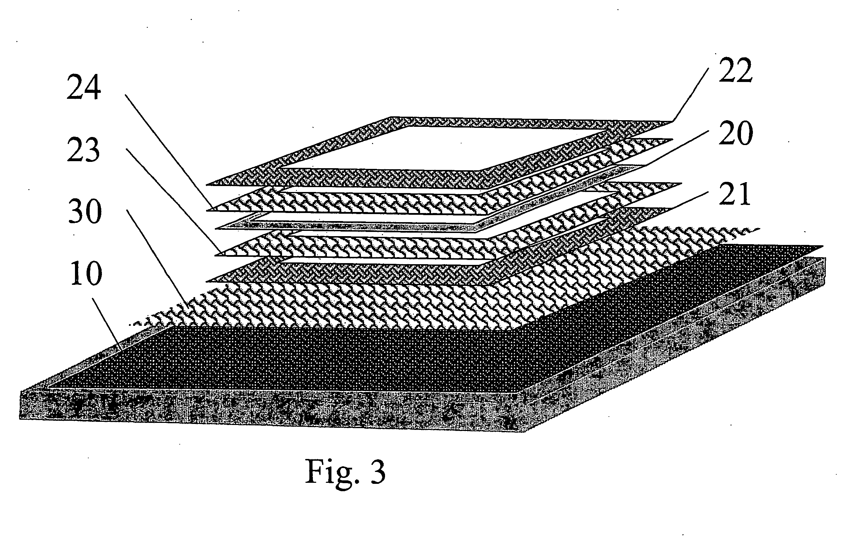

Fig. 3 zeigt eine weitere erfindungsgemäße Verfahrensvariante zur Herstellung des Bauteils mit trockenem Faserhalbzeug als Ausgangsmaterial für die einzelnen Schichten, nämlich Trägersystem-Primärstruktur 10 (z.B. C-Fasern), Isolationsschicht 21 (z.B. Glasfasern), Deckschicht 22 (z.B. Glasfasern). Die einzelnen Schichten werden jeweils aufeinander abgelegt, wobei zwischen den einzelnen Schichten 10,20,21,22 (20 bezeichnet auch in der Fig. 3 das Antennenelement) jeweils Fixierschichten 23,24,30, z.B. aus einem thermoplastischen Material, zwischengeschaltet werden. Wenn als Fixierschicht eine Folie oder ein Vlies verwendet wird, wird die Fixierschicht zwischen die zu verbindenden Schichten gelegt. Bei der Verwendung von Klebern oder Bindemittel wird diese bevorzugt auf eine oder beide zu verbindenden Flächen aufgetragen.

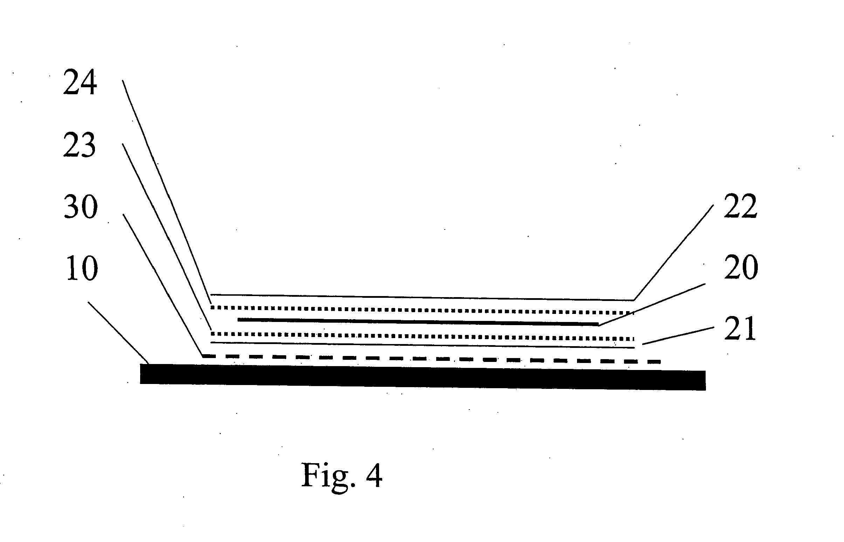

Fig. 4 zeigt den Schichtaufbau im Einzelnen.

In einem alternativen Verfahren kann in einem ersten Verfahrensschritt ein Antennensample aus Deckschicht 22, Antennenelement 20 und Isolationsschicht 21 gebildet werden. Die genannten Schichten liegen dabei zunächst als trockenes Faserhalbzeug vor. Die Bildung des Antennensamples kann z.B. in einem Harz-Injektionsverfahren oder einem Harzfilm-Verfahren geschehen. Anschließend wird der so hergestellte Antennen-Vorformling unter Zwischenschaltung einer Fixierschicht 30 auf der Trägersystem-Primärstruktur 10 abgelegt und somit fixiert. Für die Fixierschicht können die gleichen Materialien und Techniken wie oben im Bezug auf die Fixierschichten der zuvor beschriebenen Ausführung eingesetzt werden. Anschließend wird das Bauteil in einem weiteren Verfahrensschritt mit Harz infiltriert und anschließend ausgehärtet. Beide Verfahrensschritte können in einem Umluftofen oder einem Autoklaven staffinden.

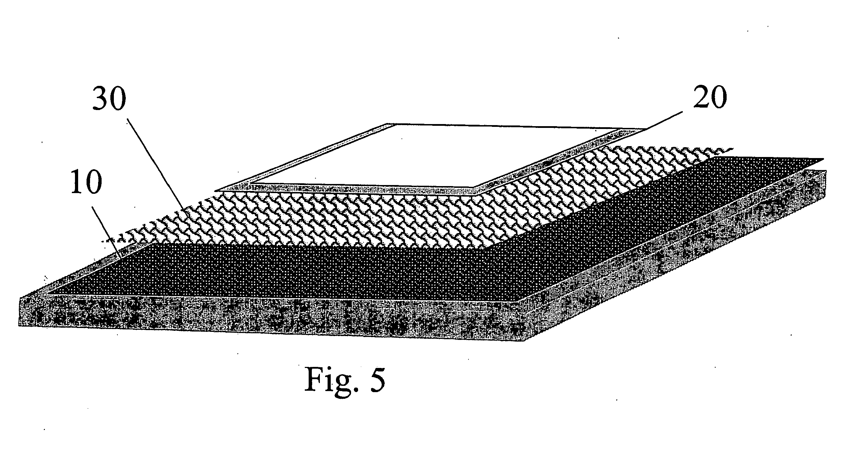

Die Fig. 5 zeigt eine weitere Variante des erfindungsgemäßen Verfahrens zur Herstellung einer strukturintegrierten Antene. Das Ausgangsmaterial der Trägersystem-Primärstruktur 10 besteht dabei aus einem trockenem Faserhalbzeug aus einem nichtleitfähigen Fasermaterial, z.B. einem Glasfasermaterial. Aufgrund der nichtleitenden Eigenschaften des Fasermaterials ist eine Isolationsschicht in dieser Ausführung nicht notwendig. Das Antennenelement 20 wird mittels Fixierschicht 30, z.B. einem Thermoplastfilm unmittelbar auf der Trägersystem-Primärstruktur 10 aufgebracht.

## Patentansprüche

1. Verfahren zur Herstellung einer strukturintegrierten Antenne in der Faserverbund-Trägerstruktur eines Fahrzeugs, insbesondere eines Fluggeräts, mit folgenden Verfahrensschritten:
- Anordnen eines Antennen-Vorformlings auf eine Trägersystem-Primärstruktur (10), welche in Form eines faserhaltigen Halbzeugs vorliegt, wobei der Antennen-Vorformling in einer Schicht angeordnete, ein oder mehrere flexible, leitfähige Antennenelemente (20) umfasst,
- Aushärten des Bauteils durch eine Temperatur- und/oder Druckbehandlung.

2. Verfahren nach Anspruch 1, **dadurch gekennzeichnet, dass** die flexiblen Antennenelemente (20) als Draht, Streifen oder Litze vorliegen.

3. Verfahren nach Anspruch 1 oder 2, **dadurch gekennzeichnet, dass** der Antennen-Vorformling auf die Trägersystem-Primärstruktur (10) aufgenäht oder aufgestickt wird.

4. Verfahren nach Anspruch 1 oder 2, **dadurch gekennzeichnet, dass** der Antennen-Vorformling auf die Trägersystem-Primärstruktur (10) mittels einer thermoplastischen Schicht (30) oder einem Harz aufgeklebt wird.

5. Verfahren nach einem der vorangehenden Ansprüche, **dadurch gekennzeichnet, dass** die Trägersystem-Primärstruktur (10) als trockenes, faserhaltiges Halbzeug vorliegt.

6. Verfahren nach Anspruch 5, **dadurch gekennzeichnet, dass** vor dem Aushärten des Bauteils eine Infiltration mit einem aushärtbaren Harz erfolgt.

7. Verfahren nach Anspruch 1 oder 2, **dadurch gekennzeichnet, dass** die Trägersystem-Primärstruktur (10) als Prepreg-Halbzeug vorliegt.

8. Verfahren nach einem der vorangehenden Ansprüche, **dadurch gekennzeichnet, dass** eine Isolationsschicht (21) zur elektrischen Isolation der elektrisch leitfähigen Elemente des Antennen-Vorformlings von der Trägersystem-Primärstruktur (10) vorhanden ist, wobei die Isolationsschicht (21) entweder Bestandteil des Antennen-Vorformling ist oder die Isolationsschicht (21) vor dem Aufbringen des Antennen-Vorformlings auf die Trägersystem-Primärstruktur (10) aufgebracht wird.

9. Verfahren nach Anspruch 8, **dadurch gekennzeichnet, dass** die Isolationsschicht (21) als trockenes faserhaltiges Halbzeug oder als Prepreg-Halbzeug vorliegt.

10. Verfahren nach einem der vorangehenden Ansprüche, **dadurch gekennzeichnet, dass** als äußerer Abschluss eine nichtleitende Deckschicht (22) vorhanden ist, welche entweder Bestandteil des Antennen-Vorformlings ist oder die nach dem Aufbringen des Antennen-Vorformlings auf den Antennen-Vorformling aufgebracht wird.

11. Verfahren nach Anspruch 10, **dadurch gekennzeichnet, dass** die Deckschicht (22) als trockenes faserhaltiges Halbzeug oder als Prepreg-Halbzeug vorliegt.

12. Strukturintegrierte Antenne in der Faserverbund-Trägerstruktur eines Fahrzeugs, insbesondere eines Fluggeräts, hergestellt, indem das oder die in einer Schicht angeordneten flexiblen leitfähigen Antennenelemente (20) während der Herstellung der Trägerstruktur eingebracht werden.
